# FASCICULE DE BREVET EUROPEEN

(11) **EP 3 225 462 B1**
(45) Date de publication et mention de la délivrance du brevet: **16.11.2022**
(21) Numéro de dépôt: 17161703.8
(22) Date de dépôt: 17.03.2017
(51) Int. Cl.: B60Q 1/30

(54) **DISPOSITIF LUMINEUX EN AU MOINS DEUX PARTIES POUR UN VÉHICULE AUTOMOBILE ET PROCÉDÉ DE GESTION DU FLUX LUMINEUX ASSOCIÉ**
LEUCHTVORRICHTUNG AUS MINDESTENS ZWEI TEILEN FÜR KRAFTFAHRZEUG UND VERFARHEN ZUR STEUERUND DER LICHTLEISTUNG
LIGHTING DEVICE IN AT LEAST TWO PARTS FOR A MOTOR VEHICLE AND METHOD TO MANAGE THE LIGHT OUTPUT

(30) Priorité: 31.03.2016 FR 1652827
(43) Date de publication de la demande: 04.10.2017
(73) Titulaire: Valeo Vision, 93012 Bobigny Cedex (FR)
(72) Inventeur: GABORIEAU, Mathieu, 49000 ANGERS (FR)
(74) Mandataire: Valeo Visibility

(56) Documents cités:
- DE-A1-102013 218 152
- FR-A1- 2 765 166
- US-A- 2 218 442
- US-A- 5 580 153
- US-A1- 2010 244 697
- US-A1- 2014 333 428

## Description

L'invention a trait au domaine de l'éclairage et de la signalisation lumineuse des véhicules automobiles. En particulier, l'invention concerne des feux réalisant une fonction lumineuse en utilisant deux parties distinctes, dont l'une peut être mobile par rapport à l'autre, comme par exemple un feu stop arrière dont une première partie est montée sur une aile arrière d'un véhicule, tandis qu'une deuxième partie est montée sur la porte du coffre.

Dans le domaine de l'éclairage et de la signalisation lumineuse des véhicules automobiles, il devient de plus en plus courant d'avoir recours à des sources lumineuses de type diode électroluminescente, LED. Une LED est un composant semi-conducteur, qui, lorsqu'il est parcouru par un courant électrique d'une intensité prédéterminée, émet des rayons lumineux. Un flux lumineux d'une intensité prédéterminée, généralement en rapport avec l'intensité du courant électrique qui traverse la LED, peut alors être mesuré. La technologie des LEDs permet d'une part de réduire les besoins d'énergie électrique des dispositifs d'éclairage et/ou de signalisation, et d'autre part elle permet aux constructeurs de véhicules de créer des signatures optiques intéressantes et individuelles. Une pluralité de LEDs peut par exemple être disposée le long d'un contour curviligne.

Il est connu de pourvoir les faces arrières d'un véhicule de feux arrière qui sont disposés intégralement sur des parties fixes de la carrosserie. Il s'agit par exemple des ailes latérales arrière du véhicule. Alternativement, les feux arrière peuvent être séparés en deux parties ou plus, au moins une partie étant disposée sur une partie fixe, tandis qu'au moins une autre partie du même feu est disposée sur la porte du coffre du véhicule. Cette partie du feu est donc mobile par rapport à la partie fixe, et les deux parties du même feu peuvent prendre des positions relatives différentes en dépendance de la position de la porte du coffre. Cette solution est de plus en plus commune, puisque beaucoup d'utilisateurs revendiquent des ouvertures de coffres larges. Comme ceci engendre la nécessité de prévoir des portes de coffres toujours plus grandes, l'espace disponible pour le montage des feux arrière fixes devient de plus en plus restreint. D'où paraît la nécessité de disposer une partie des feux sur une face de la porte du coffre. Les feux arrière peuvent réaliser des fonctions lumineuses différentes du véhicule, comme par exemple un feu stop, un indicateur de direction, ou autres, comme cela est connu du document US 2 218 442 A.

De manière connue par ailleurs, l'alimentation des deux parties (fixe et mobile) d'un même feu est réalisée de manière commune pour les deux parties. C'est-à-dire, chacune des parties du feu émet à tout instant un flux lumineux d'une intensité identique. Ceci ne correspond pas à une utilisation efficace, notamment lorsque la porte du coffre, qui porte une partie du feu arrière est ouverte et lorsque le feu en question est allumé.

L'invention a pour objectif de pallier à au moins un des problèmes posés par l'art antérieur.

L'invention a en particulier pour objectif de proposer un dispositif et un procédé de gestion du flux lumineux qui pallient à au moins un des problèmes posés par l'art antérieur.

L'invention a pour objet un dispositif lumineux pour un véhicule automobile. Le dispositif comprend au moins deux sources lumineuses, desquelles au moins une première source est destinée à être disposée sur une première partie du châssis du véhicule automobile, et au moins une deuxième source est destinée à être disposée sur une deuxième partie du châssis, de façon à ce que la première et la deuxième sources soient aptes à prendre aux moins deux positions relatives distinctes et prédéterminées (P, P') l'une par rapport à l'autre. Le dispositif est remarquable en ce qu'il comprend des moyens de commande du flux lumineux des sources lumineuses, configurés pour commander l'émission de flux lumineux différents par les sources lumineuses, en fonction de la position relative de la première et de la deuxième sources, et en ce que les moyens de commande sont configurés pour commander les deux sources lumineuses de sorte à ce que en fonction de la position relative de la première et de la deuxième sources de sorte à ce que, pour au moins une première position relative prédéterminée, la première source lumineuse participe à la réalisation d'une première fonction lumineuse réglementaire prédéterminée du véhicule automobile et la deuxième source lumineuse participe à la réalisation d'une deuxième fonction lumineuse réglementaire prédéterminée du véhicule automobile distincte de la première fonction lumineuse réglementaire prédéterminée et de sorte à ce que, pour au moins une deuxième position relative prédéterminée, la première source lumineuse participe à la réalisation de la deuxième fonction lumineuse réglementaire prédéterminée.

De préférence, le dispositif peut comprendre des moyens capables d'obtenir un signal indicatif de la position relative des première et deuxième sources.

Les moyens de commande du flux lumineux peuvent de préférence être configurés pour commander les première et deuxième sources lumineuses de sorte à ce que ces sources, lorsqu'elles sont dans la première position relative, émettent ensemble un premier flux lumineux global apte à réaliser la première fonction lumineuse réglementaire prédéterminée.

De préférence, les moyens de commande du flux lumineux peuvent être configurés pour commander la première source de manière à ce que la première source émette un flux lumineux d'une première intensité lorsque la position relative indiquée correspond à la première position prédéterminée (P), et un flux d'une deuxième intensité lorsque la position relative indiquée correspond à la deuxième position prédéterminée (P'), la première intensité émise par la première source étant inférieure à la deuxième intensité émise par la première source.

De préférence, les moyens de commande du flux lumineux peuvent être configurés pour commander la deuxième source de manière à ce que la deuxième source émette un flux lumineux d'une première intensité lorsque la position relative indiquée correspond à la première position prédéterminée (P), et un flux d'une deuxième intensité lorsque la position relative indiquée correspond à la deuxième position prédéterminée (P'), la première intensité émise par la deuxième source étant supérieure à la deuxième intensité émise par la deuxième source.

De préférence, les moyens de commande du flux lumineux peuvent être configurés pour commander la deuxième source de manière à ce que la deuxième source émette un flux lumineux d'une première intensité lorsque la position relative indiquée correspond à la première position prédéterminée (P), et un flux d'une deuxième intensité lorsque la position relative indiquée correspond à la deuxième position prédéterminée (P'), la première intensité émise par la deuxième source étant inférieure à la deuxième intensité émise par la deuxième source.

De préférence, l'une des première source et/ou la deuxième source peut être mobile entre la première et la deuxième position prédéterminée, l'autre étant fixe, et les moyens de commande du flux lumineux sont configurés de manière à ce que la source mobile émette un flux d'une intensité qui soit fonction d'une position intermédiaire entre la première position (P) et la deuxième position (P') prédéterminée.

Les moyens de commande du flux lumineux peuvent préférentiellement être configurés de manière à alimenter les sources lumineuses à l'aide d'un courant électrique d'une intensité qui est une fonction de l'intensité du flux lumineux à émettre par les sources. De préférence, la première et/ou la deuxième source lumineuse peut comprendre plusieurs sources lumineuses élémentaires.

Les sources lumineuses peuvent avantageusement comprendre au moins une puce semiconductrice émettrice de lumière, par exemple une diode électroluminescente, LED, ou une diode électroluminescente organique, OLED.

De manière préférée, les moyens d'obtention peuvent comprendre des moyens récepteurs aptes à recevoir un signal provenant d'un réseau de communication interne au véhicule automobile.

De préférence, le dispositif peut comprendre une pluralité de faces physiquement disjointes par laquelle la lumière émise par la première et/ou la deuxième source lumineuse est émise.

De préférence, les moyens d'obtention d'un signal indicatif de la position relative des première et deuxième sources comprennent des moyens de détection de la position relative des première et deuxième sources.

Les moyens d'obtention peuvent préférentiellement comprendre un inclinomètre ou un accéléromètre.

Les moyens d'obtention et/ou les moyens de commande peuvent de préférence comprendre un élément microcontrôleur.

L'invention a également pour objet un véhicule automobile équipé d'un dispositif lumineux, remarquable en ce que le dispositif lumineux correspond à l'invention.

La première source lumineuse peut de préférence être arrangée sur une aile arrière du châssis, et la deuxième source lumineuse peut préférentiellement être arrangée sur une face de la porte du coffre du véhicule, qui est mobile par rapport à l'aile arrière du châssis.

De préférence, la première position prédéterminée peut correspondre à la position fermée de la porte du coffre, et la deuxième position prédéterminée peut correspondre à la position ouverte de la porte du coffre.

L'invention a également pour objet un procédé de gestion du flux lumineux dans un dispositif lumineux pour un véhicule automobile. Le procédé est remarquable en ce qu'il comprend les étapes suivantes :
- mettre à disposition un dispositif lumineux comprenant au moins deux sources lumineuses, desquelles au moins une première source est destinée à être disposée sur une première partie du châssis du véhicule automobile,
   et au moins une deuxième source est destinée à être disposée sur une deuxième partie du châssis, de façon à ce que les première et deuxième sources soient aptes à prendre aux moins deux positions relatives distinctes et prédéterminées l'une par rapport à l'autre ;
- obtenir un signal indicatif de la position relative des première et deuxième sources à l'aide de moyens capables d'obtenir un tel signal ;
- commander les deux sources lumineuses de sorte à ce que les deux sources lumineuses participent à la réalisation d'une même fonction lumineuse réglementaire prédéterminée du véhicule automobile, ou participent à la réalisation de deux fonctions lumineuses réglementaires prédéterminées différentes du véhicule, en fonction de la position relative de la première et de la deuxième source, la position étant indiquée par ledit signal.
- alimenter au moins une des sources lumineuses de façon à émettre des flux lumineux différents en fonction de la position relative des première et deuxième sources, la position étant indiquée par ledit signal.

En utilisant les mesures de l'invention il devient possible de satisfaire à des dispositions réglementaires en vigueur par rapport à l'intensité du flux lumineux émis par des dispositifs lumineux agencés sur deux parties d'un véhicule automobile, l'une étant mobile par rapport à l'autre. Un tel cas se présente par exemple pour un feu stop arrière, disposé en partie sur une aile arrière du véhicule et en partie sur la porte du coffre du véhicule. Evidemment l'invention ne se limite pas à cet exemple concret. Dans un tel exemple, la réglementation prévoit qu'il est nécessaire que la partie fixe du feu émette un flux lumineux d'une première intensité prédéterminée lorsque la porte du coffre est ouverte. Dans cette disposition, en principe uniquement la partie fixe est visible d'une position située en arrière du véhicule. Lorsque la porte du coffre est fermée, cette même première intensité lumineuse doit être réalisée de manière globale par l'ensemble des parties fixe et mobile, montées sur l'aile et la porte du coffre, du véhicule. Il s'ensuit qu'il est permis que la partie fixe émette un flux lumineux d'une deuxième intensité, moindre que la première intensité, lorsque la porte du coffre est fermée. En effet, la partie mobile du feu étant alors visible, elle peut également contribuer à l'émission du flux lumineux global du feu arrière. Dans un cas de figure particulier, une première source lumineuse, dont au moins une partie mobile est montée sur la porte du coffre du véhicule est apte à assurer une première fonction lumineuse à elle-même lorsque le coffre est fermé. Une deuxième source lumineuse, dont au moins une partie fixe est montée sur l'aile du véhicule, est alors destinée à réaliser une deuxième fonction lumineuse, différente de la première fonction, lorsque le coffre est fermé. Lorsque le coffre est ouvert, au moins la partie mobile de la première source n'est plus visible depuis l'arrière du véhicule, de façon à ce que, selon l'invention, la deuxième source va contribuer à la réalisation de la première fonction lumineuse. De cette façon, dans les états fermés et ouverts de la porte du coffre, l'ensemble des sources lumineuses reste apte à réaliser de manière commune un flux lumineux conforme à la réglementation. Le dispositif et le procédé selon l'invention permettent entre autres de réaliser ce cas prévu par la réglementation. Ceci permet notamment une gestion plus efficace et plus économique de l'énergie électrique nécessaire pour le fonctionnement des feux en question.

D'autres caractéristiques et avantages de la présente invention seront mieux compris à l'aide de la description exemplaire et des dessins parmi lesquels :
- la figure 1 est une illustration schématique d'une vue latérale de la partie arrière d'un véhicule automobile équipé d'un dispositif selon un mode de réalisation préférentiel de l'invention ;
- la figure 2 est une illustration d'un mode de réalisation préférentiel du dispositif selon l'invention ;
- la figure 3 est une illustration d'un mode de réalisation préférentiel du dispositif selon l'invention.

Dans la description qui suit, des numéros de référence similaires seront utilisés pour décrire des concepts similaires à travers des modes de réalisation différents de l'invention.

Ainsi, les numéros 100, 200, 300 décrivent par exemple un dispositif lumineux dans trois modes de réalisation différents conformes à l'invention.

Sauf indication spécifique du contraire, des caractéristiques techniques décrites en détails pour un mode de réalisation donné peuvent être combinés aux caractéristiques techniques décrites dans le contexte d'autres modes de réalisation décrits à titre exemplaire et non limitatif.

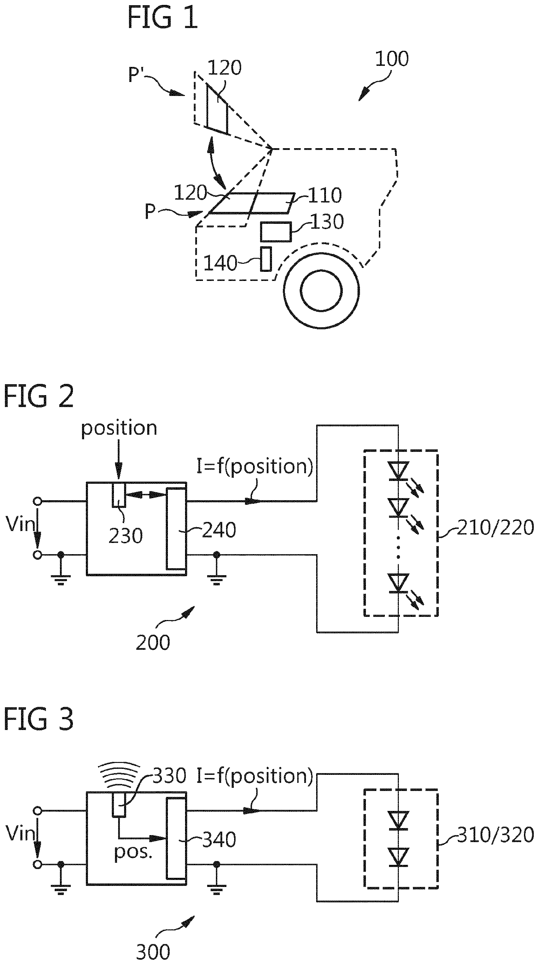

La figure 1 illustre de manière schématique la partie arrière d'un véhicule automobile, qui comprend un dispositif lumineux, représenté par le feu arrière, selon l'invention. L'invention sera illustrée à l'aide du dispositif lumineux 100 dont une première partie 110 est arrangée sur une partie de l'aile arrière fixe du véhicule, tandis qu'une deuxième partie 120 est arrangée sur une partie mobile du véhicule, comme par exemple la porte du coffre du véhicule. Comme illustré, il s'ensuit que la deuxième partie 120 puisse prendre au moins deux postions P, P' distinctes par rapport à la première partie 110, en dépendance de l'état fermé ou ouvert de la porte du coffre. Evidemment l'invention peut trouver des applications autres que celle qui est décrite à titre exemplaire, lorsque les contraintes techniques sont identiques à celles qui sont décrites. De même, le dispositif peut être constitué de plus de deux parties, les parties mobiles et fixes comprenant par exemple des pluralités respectives de parties.

Chacune des parties 110, 120 peut être décrite de manière générale par le terme « une source lumineuse ». Une source lumineuse peut être composée d'une pluralité de sources lumineuses élémentaires, telles que par exemple des diodes électroluminescentes, LEDs, des diodes laser ou des diodes électroluminescentes organiques, OLED.

Des composants d'un dispositif lumineux pour un véhicule automobile qui n'ont pas d'impact direct sur le fonctionnement de l'invention ne sont pas décrits de manière détaillée dans le contexte de la présente invention. Ainsi, il est connu que de tels dispositifs comprennent des moyens optiques comprenant par exemple des lentilles optiques et/ou des guides de lumière pour guider la lumière émise par chacune des sources élémentaires. De manière similaire, il est connu d'utiliser des moyens de pilotage de l'alimentation des sources élémentaires. De tels moyens servent à convertir un courant continu d'une première intensité, fourni en général par une source de courant interne au véhicule telle qu'une batterie, en un courant de charge d'une deuxième intensité, adapté à alimenter les sources de lumière élémentaires. Il est également connu de fournir plusieurs intensités de courant distinctes en fonction de l'intensité requise de la lumière émise par les sources lumineuses élémentaires.

Le dispositif comprend des moyens 130 capables d'obtenir un signal indicatif de la position relative des première et deuxième sources de lumière, donc des parties fixe et mobile du dispositif lumineux 100. En utilisant ce signal qui indique la position relative des deux parties du feu, des moyens de commande du flux lumineux 140, qui peuvent par exemple être intégrés aux moyens de pilotage de l'alimentation des sources de lumière, permettent aux sources 110, 120 d'émettre des flux lumineux d'intensités différentes en fonction de leur position relative. Par exemple, lorsque une première position P est indiquée par les moyens 130, un courant d'une première intensité est utilisé pour alimenter les LEDs de la source 110, tandis que lorsqu'une deuxième position P' est indiquée par les moyens 130, un courant d'une deuxième intensité est utilisé pour alimenter les LEDs de la source 110.

Comme l'intensité de la lumière émise par une LED dépend de l'intensité du courant électrique qui la traverse, des flux lumineux d'intensités différentes sont ainsi réalisés en fonction de la position P, P' signalée.

La figure 2 montre un mode de réalisation préférentiel du dispositif 200 selon l'invention. Les sources lumineuses 210, 220 sont montrées de manière équivalente. Les moyens de commande du flux lumineux 240 obtiennent un signal indiquant la position relative des sources lumineuses 210, 220 et fournissent aux sources un courant d'alimentation d'une intensité qui est une fonction de la position des sources. Dans ce mode de réalisation, les moyens d'obtention 230 sont réalisés par des moyens de réception aptes à lire des messages qui circulent sur un réseau de communication du véhicule. Typiquement le système informatique d'un véhicule automobile a accès à une pluralité de paramètres du véhicule, y compris l'état d'ouverture ou de fermeture des portes. Ainsi, lorsque la porte du coffre est ouverte/fermée, un message correspondant peut circuler sur le bus de communication du véhicule, qui peut être un bus de type « controller area network », CAN.

Les moyens d'obtention 230 forment une interface par rapport au bus de communication, de manière à ce que l'information en question puisse être utilisée par les moyens de commande du flux lumineux 240. Alternativement, au lieu de lire l'information d'ouverture/fermeture de la porte du coffre sur le bus de communication, l'information lue peut également indiquer de manière directe une intensité de flux qui est à émettre par chacune des sources 210, 220. Il suffit que l'information obtenue par les moyens 230 puisse indiquer, de manière directe ou indirecte, la position relative des deux sources lumineuses 220, 230. L'information spécifique qui circule sur le bus de communication dépend des implémentations spécifiques des systèmes de contrôle de bord de chaque véhicule.

La figure 3 montre un autre mode de réalisation préférentiel du dispositif 300 selon l'invention. Les sources lumineuses 310, 320 sont montrées de manière équivalente. Les moyens de commande du flux lumineux 340 obtiennent un signal indiquant la position relative des sources lumineuses 310, 320 et fournissent aux sources un courant d'alimentation d'une intensité qui est une fonction de la position relative des sources. Dans ce mode de réalisation, les moyens d'obtention 330 sont des moyens actifs qui permettent de détecter la position d'au moins la source mobile 320 par rapport à la source fixe 310. Les moyens d'obtention peuvent par exemple comprendre des composants électroniques tels que des gyroscopes, des accéléromètres ou des inclinomètres. Dans un mode de réalisation particulièrement préféré, de tels composants électroniques sont installés sur le circuit imprimé qui porte les sources élémentaires de la deuxième source 320. Lorsque la porte du coffre du véhicule est ouverte, la position du circuit imprimé change. Ce changement est détecté par les composants électroniques en question de manière connue. Le signal de détection est alors relayé de manière filaire ou non filaire aux moyens de commande du flux lumineux 340, qui alimentent les sources 320 et 310 en fonction du signal de détection reçu.

Un tel mode de réalisation, comprenant des moyens d'obtention 330 actifs, présente l'avantage d'être indépendant du système informatique et/ou de communication du véhicule automobile qu'il équipe.

Une fois que le signal indiquant la position relative des sources lumineuses est disponible, le procédé de gestion du flux peut être réalisé selon plusieurs façons, par exemple en utilisant des circuits électroniques dédiés ou en programmant un élément microcontrôleur programmable. De telles implémentations sont à la portée de l'homme du métier.

Un exemple de gestion préféré est décrit en prenant référence par rapport à la figure 1. Lorsque la porte du coffre du véhicule automobile est fermée, les moyens 130 détectent la position P de la source lumineuse 120 par rapport à la source 110. Dans cette position, la source 110 est destinée à réaliser une première fonction lumineuse, et la deuxième source lumineuse 120 est destinée à réaliser une deuxième fonction lumineuse, différente de la première fonction. Dans une mode de réalisation alternatif non-illustré, les sources lumineuses 110, 120 peuvent être des parties respectivement fixes et mobiles d'un ensemble de deux ensembles de sources lumineuses plus grands, destinés à réaliser ensemble les première et deuxième fonctions lumineuses respectivement.

On suppose que la première fonction lumineuse requiert l'émission d'un flux lumineux d'une intensité I-110 dirigé vers l'arrière du véhicule, tandis que la deuxième fonction lumineuse requiert l'émission d'un flux lumineux d'une intensité I-120. Comme conséquence de cette détection, les moyens de commande 140 amènent, dans l'exemple montré, les sources 110 et 120 à émettre chacune un flux lumineux d'une première intensité I-110, I-120, les premières intensités étant conformes aux deux fonctions lumineuses respectivement.

Le cas exemplaire suppose que les deux fonctions sont allumées en même temps. Evidemment, si l'une des deux fonctions n'est pas allumée, la source qui est respectivement destinée à réaliser la fonction en question n'émet aucun flux lumineux, ou un flux nul.

Lorsque la porte du coffre du véhicule automobile est complètement ouverte, les moyens 130 détectent la position P' de la source lumineuse 120 par rapport à la source 110. La source lumineuse 120 n'est plus apte à émettre à elle-seule l'intensité lumineuse requise I-120 vers l'arrière du véhicule. Comme conséquence de cette détection, les moyens de commande 140 amènent la première source 110 à émettre une deuxième intensité lumineuse II-110, sensiblement égale à l'intensité lumineuse I-120. Selon le premier niveau d'intensité lumineuse I-110, ceci peut engendrer soit une augmentation ou une diminution de l'intensité lumineuse émise par la source 110. Dans cette position P', la première source contribue donc à la réalisation de la deuxième fonction lumineuse. De manière générale, les moyens de commande amènent la première source à combler la partie du flux lumineux requise par la deuxième fonction lumineuse, qui ne peut plus être réalisée par la partie mobile 120 dans la position P'. Dans un mode de réalisation particulier, la source lumineuse 120 est éteinte dans la position P'. Dans ce cas, suite à la détection de la position P' par les moyens décrits, correspondant au coffre ouvert, la source lumineuse 110 est amenée à réaliser la fonction que la source lumineuse 120 réalise en position P, correspondant au coffre fermé.

De préférence, les moyens de commande 140 amènent en même temps la deuxième source 120 à diminuer l'intensité du flux lumineux émis par rapport à la première intensité pour arriver à une deuxième intensité moins importante, par exemple nulle.

De manière avantageuse, les moyens d'obtention 130 et de gestion 140 sont configurés de manière à ce que, pour des positions intermédiaires détectées entre la position fermée P et la position complètement ouverte P' de la porte du coffre, les intensités des flux lumineux émis par les sources 110 et 120 se situent à des niveaux intermédiaires entre les extrêmes décrits.

De cette façon, lorsque la porte du coffre passe graduellement de l'état fermé à l'état complètement ouvert, l'intensité du flux lumineux émis par la première source 110 passe graduellement du premier niveau d'intensité I-110 à un niveau d'intensité II-110. En même temps, l'intensité du flux lumineux émis par la deuxième source 120 passe graduellement du premier niveau I-120 à un niveau d'intensité nulle. De même, lorsque la porte du coffre se referme, les sources lumineuses 110 et 120 sont de nouveau graduellement amenées à émettre des flux lumineux correspondant aux deux fonctions lumineuses à la réalisation desquelles elles participent.

L'intensité globale émise par les sources lumineuses 110 et 120 et de préférence commandée, dans toutes les positions relatives prises par les deux sources, de façon à ce que le dispositif réalise les contraintes d'une fonction lumineuse réglementaire. On entend notamment par fonction lumineuse réglementaire une fonction lumineuse dont l'intensité lumineuse doit être comprise entre une intensité lumineuse inférieure réglementaire prédéterminée et une intensité lumineuse supérieure réglementaire prédéterminée.

## Revendications

1. Dispositif lumineux (100, 200, 300) pour un véhicule automobile, comprenant au moins deux sources lumineuses (110,120 ; 210,220 ; 310,320), desquelles au moins une première source (110, 210, 310) est destinée à être disposée sur une première partie du châssis du véhicule automobile, et au moins une deuxième source (120, 220, 320) est destinée à être disposée sur une deuxième partie du châssis, de façon à ce que la première (110, 210, 310) et la deuxième (120, 220, 320) sources soient aptes à prendre aux moins deux positions relatives distinctes et prédéterminées (P, P') l'une par rapport à l'autre,
tel que le dispositif comprend des moyens de commande du flux lumineux (140, 240, 340) des sources lumineuses, configurés pour commander l'émission de flux lumineux différents par les sources lumineuses, en fonction de la position relative de la première (110, 210, 310) et de la deuxième (120, 220, 320) sources,
et tel que les moyens de commande sont configurés pour commander les deux sources lumineuses (110, 120 ; 210,220 ; 310,320) en fonction de la position relative de la première (110, 210, 310) et de la deuxième (120, 220, 320) sources de sorte à ce que, pour au moins une première position relative prédéterminée, la première source lumineuse participe à la réalisation d'une première fonction lumineuse réglementaire prédéterminée du véhicule automobile et la deuxième source lumineuse participe à la réalisation d'une deuxième fonction lumineuse réglementaire prédéterminée du véhicule automobile distincte de la première fonction lumineuse réglementaire prédéterminée, le dispositif étant **caractérisé en ce que** les moyens de commande sont configurés
de sorte à ce que, pour au moins une deuxième position relative prédéterminée, la première source lumineuse participe à la réalisation de la deuxième fonction lumineuse réglementaire prédéterminée.

2. Dispositif selon la revendication 1, **caractérisé en ce que** le dispositif comprend des moyens (130, 230, 330) capables d'obtenir un signal indicatif de la position relative des première et deuxième sources.

3. Dispositif selon une des revendications 1 ou 2, **caractérisé en ce que** les moyens de commande du flux lumineux sont configurés pour commander les première et deuxième sources lumineuses de sorte à ce que ces sources, lorsqu'elles sont dans la première position relative, émettent ensemble un premier flux lumineux global apte à réaliser la première fonction lumineuse réglementaire prédéterminée.

4. Dispositif selon une des revendications 1 à 3, **caractérisé en ce que** les moyens de commande du flux lumineux (140, 240, 340) sont configurés pour commander la première source de manière à ce que la première source (110, 210, 310) émette un flux lumineux d'une première intensité lorsque la position relative indiquée correspond à la première position prédéterminée (P), et un flux d'une deuxième intensité lorsque la position relative indiquée correspond à la deuxième position prédéterminée (P'), la première intensité émise par la première source étant inférieure à la deuxième intensité émise par la première source.

5. Dispositif selon une des revendications 1 à 4, **caractérisé en ce que** les moyens de commande du flux lumineux (140, 240, 340) sont configurés pour commander la deuxième source de manière à ce que la deuxième source (120, 220, 320) émette un flux lumineux d'une première intensité lorsque la position relative indiquée correspond à la première position prédéterminée (P), et un flux d'une deuxième intensité lorsque la position relative indiquée correspond à la deuxième position prédéterminée (P'), la première intensité émise par la deuxième source étant supérieure à la deuxième intensité émise par la deuxième source.

6. Dispositif selon une des revendications 1 à 4, **caractérisé en ce que** les moyens de commande du flux lumineux (140, 240, 340) sont configurés pour commander la deuxième source de manière à ce que la deuxième source (120, 220, 320) émette un flux lumineux d'une première intensité lorsque la position relative indiquée correspond à la première position prédéterminée (P), et un flux d'une deuxième intensité lorsque la position relative indiquée correspond à la deuxième position prédéterminée (P'), la première intensité émise par la deuxième source étant inférieure à la deuxième intensité émise par la deuxième source.

7. Dispositif selon une des revendications 3 à 6, **caractérisé en ce que** la première source et/ou la deuxième source est mobile entre la première et la deuxième position prédéterminée, l'autre étant fixe, et **en ce que** les moyens de commande du flux lumineux sont configurés de manière à ce que la source mobile émette un flux d'une intensité qui soit fonction d'une position intermédiaire entre la première position (P) et la deuxième position (P') prédéterminée.

8. Véhicule automobile équipé d'un dispositif lumineux, **caractérisé en ce que** le dispositif lumineux correspond au dispositif selon une des revendications 1 à 7.

9. Véhicule automobile selon la revendication 8, **caractérisé en ce que** la première source lumineuse est arrangée sur une aile arrière du châssis, et **en ce que** la deuxième source lumineuse est arrangée sur une face de la porte du coffre du véhicule, qui est mobile par rapport à l'aile arrière du châssis.

10. Véhicule automobile selon la revendication 9, **caractérisé en ce que** la première position prédéterminée correspond à la position fermée de la porte du coffre, et **en ce que** la deuxième position prédéterminée correspond à la position ouverte de la porte du coffre.

11. Procédé de gestion du flux lumineux dans un dispositif lumineux (100, 200, 300) pour un véhicule automobile, le procédé comprenant les étapes suivantes :
- mettre à disposition un dispositif lumineux comprenant au moins deux sources lumineuses, desquelles au moins une première source (110, 210, 310) est destinée à être disposée sur une première partie du châssis du véhicule automobile, et au moins une deuxième source (120, 220, 320) est destinée à être disposée sur une deuxième partie du châssis, de façon à ce que les première et deuxième sources soient aptes à prendre aux moins deux positions relatives distinctes et prédéterminées (P, P') l'une par rapport à l'autre
- obtenir un signal indicatif de la position relative des première et deuxième sources à l'aide de moyens (130, 230, 330) capables d'obtenir un tel signal
- commander les deux sources lumineuses en fonction de la position relative de la première et de la deuxième sources de sorte à ce que, pour au moins une première position relative prédéterminée, la première source lumineuse (110, 210, 310) participe à la réalisation d'une première fonction lumineuse réglementaire prédéterminée du véhicule automobile et la deuxième source lumineuse (120, 220, 320) participe à la réalisation d'une deuxième fonction lumineuse réglementaire prédéterminée du véhicule automobile distincte de la première fonction lumineuse réglementaire prédéterminée et de sorte à ce que, pour au moins une deuxième position relative prédéterminée, la première source lumineuse (110, 210, 310) participe à la réalisation de la deuxième fonction lumineuse réglementaire prédéterminée, la position étant indiquée par ledit signal ;
- alimenter au moins une des sources lumineuses de façon à émettre des flux lumineux différents en fonction de la position relative des première et deuxième sources, la position étant indiquée par ledit signal.

## Patentansprüche

1. Leuchtvorrichtung (100, 200, 300) für ein Kraftfahrzeug, beinhaltend mindestens zwei Lichtquellen (110, 120; 210, 220; 310, 320), von denen mindestens eine erste Quelle (110, 210, 310) dazu bestimmt ist, an einem ersten Teil des Rahmens des Kraftfahrzeugs angeordnet zu sein, und mindestens eine zweite Quelle (120, 220, 320) dazu bestimmt ist, an einem zweiten Teil des Rahmens angeordnet zu sein, sodass die erste (110, 210, 310) und die zweite (120, 220, 320) Quelle dazu fähig sind, mindestens zwei unterschiedliche und vorgegebene relative Positionen (P, P') zueinander einzunehmen, wobei die Vorrichtung Mittel zur Ansteuerung der Lichtleistung (140, 240, 340) der Lichtquellen beinhaltet, die dazu konfiguriert sind, das Emittieren unterschiedlicher Lichtleistungen durch die Lichtquellen in Abhängigkeit von der relativen Position der ersten (110, 210, 310) und der zweiten (120, 220, 320) Quelle anzusteuern, und wobei die Ansteuerungsmittel dazu konfiguriert sind, die zwei Lichtquellen (110, 120; 210, 220; 310, 320) in Abhängigkeit von der relativen Position der ersten (110, 210, 310) und der zweiten (120, 220, 320) Quelle so anzusteuern, dass für mindestens eine erste vorgegebene relative Position die erste Lichtquelle an der Realisierung einer ersten vorgegebenen vorschriftsmäßigen Leuchtfunktion des Kraftfahrzeugs mitwirkt und die zweite Lichtquelle an der Realisierung einer zweiten vorgegebenen vorschriftsmäßigen Leuchtfunktion des Kraftfahrzeugs mitwirkt, die sich von der ersten vorgegebenen vorschriftsmäßigen Leuchtfunktion unterscheidet, wobei die Vorrichtung **dadurch gekennzeichnet ist, dass** die Ansteuerungsmittel so konfiguriert sind, dass für mindestens eine zweite vorgegebene relative Position die erste Lichtquelle an der Realisierung der zweiten vorgegebenen vorschriftsmäßigen Leuchtfunktion mitwirkt.

2. Vorrichtung nach Anspruch 1, **dadurch gekennzeichnet, dass** die Vorrichtung Mittel (130, 230, 330) beinhaltet, die dazu fähig sind, ein Signal zu erfassen, das die relative Position der ersten und der zweiten Quelle angibt.

3. Vorrichtung nach einem der Ansprüche 1 oder 2, **dadurch gekennzeichnet, dass** die Mittel zur Ansteuerung der Lichtleistung dazu konfiguriert sind, die erste und die zweite Lichtquelle so anzusteuern, dass diese Quellen, wenn sie sich in der ersten relativen Position befinden, gemeinsam eine erste Gesamtlichtleistung emittieren, die dazu fähig ist, die erste vorgegebene vorschriftsmäßige Leuchtfunktion zu realisieren.

4. Vorrichtung nach einem der Ansprüche 1 bis 3, **dadurch gekennzeichnet, dass** die Mittel zur Ansteuerung der Lichtleistung (140, 240, 340) dazu konfiguriert sind, die erste Quelle so anzusteuern, dass die erste Quelle (110, 210, 310) eine Lichtleistung mit einer ersten Stärke emittiert, wenn die angegebene relative Position der ersten vorgegebenen Position (P) entspricht, und eine Leistung mit einer zweiten Stärke emittiert, wenn die angegebene relative Position der zweiten vorgegebenen Position (P') entspricht, wobei die durch die erste Quelle emittierte erste Stärke kleiner ist als die durch die erste Quelle emittierte zweite Stärke.

5. Vorrichtung nach einem der Ansprüche 1 bis 4, **dadurch gekennzeichnet, dass** die Mittel zur Ansteuerung der Lichtleistung (140, 240, 340) dazu konfiguriert sind, die zweite Quelle so anzusteuern, dass die zweite Quelle (120, 220, 320) eine Lichtleistung mit einer ersten Stärke emittiert, wenn die angegebene relative Position der ersten vorgegebenen Position (P) entspricht, und eine Leistung mit einer zweiten Stärke emittiert, wenn die angegebene relative Position der zweiten vorgegebenen Position (P') entspricht, wobei die durch die zweite Quelle emittierte erste Stärke größer ist als die durch die zweite Quelle emittierte zweite Stärke.

6. Vorrichtung nach einem der Ansprüche 1 bis 4, **dadurch gekennzeichnet, dass** die Mittel zur Ansteuerung der Lichtleistung (140, 240, 340) dazu konfiguriert sind, die zweite Quelle so anzusteuern, dass die zweite Quelle (120, 220, 320) eine Lichtleistung mit einer ersten Stärke emittiert, wenn die angegebene relative Position der ersten vorgegebenen Position (P) entspricht, und eine Leistung mit einer zweiten Stärke emittiert, wenn die angegebene relative Position der zweiten vorgegebenen Position (P') entspricht, wobei die durch die zweite Quelle emittierte erste Stärke kleiner ist als die durch die zweite Quelle emittierte zweite Stärke.

7. Vorrichtung nach einem der Ansprüche 3 bis 6, **dadurch gekennzeichnet, dass** die erste Quelle und/oder die zweite Quelle zwischen der ersten und der zweiten vorgegebenen Position beweglich ist, während die andere fest ist, und dass die Mittel zur Ansteuerung der Lichtleistung so konfiguriert sind, dass die bewegliche Quelle eine Leistung mit einer Stärke emittiert, die von einer Zwischenposition zwischen der ersten Position (P) und der zweiten vorgegebenen Position (P') abhängt.

8. Kraftfahrzeug, das mit einer Leuchtvorrichtung ausgerüstet ist, **dadurch gekennzeichnet, dass** die Leuchtvorrichtung der Vorrichtung nach einem der Ansprüche 1 bis 7 entspricht.

9. Kraftfahrzeug nach Anspruch 8, **dadurch gekennzeichnet, dass** die erste Lichtquelle an einem hinteren Kotflügel des Rahmens eingerichtet ist und dass die zweite Quelle an einer Fläche der Heckklappe des Fahrzeugs, die mit Bezug auf den hinteren Kotflügel des Rahmens beweglich ist, eingerichtet ist.

10. Kraftfahrzeug nach Anspruch 9, **dadurch gekennzeichnet, dass** die erste vorgegebene Position der geschlossenen Position der Heckklappe entspricht und dass die zweite vorgegebene Position der geöffneten Position der Heckklappe entspricht.

11. Verfahren zur Steuerung der Lichtleistung in einer Leuchtvorrichtung (100, 200, 300) für ein Kraftfahrzeug, wobei das Verfahren die folgenden Schritte beinhaltet:
- Bereitstellen einer Leuchtvorrichtung, die mindestens zwei Lichtquellen beinhaltet, von denen mindestens eine erste Quelle (110, 210, 310) dazu bestimmt ist, an einem ersten Teil des Rahmens des Kraftfahrzeugs angeordnet zu sein, und mindestens eine zweite Quelle (120, 220, 320) dazu bestimmt ist, an einem zweiten Teil des Rahmens angeordnet zu sein, sodass die erste und die zweite Quelle dazu fähig sind, mindestens zwei unterschiedliche und vorgegebene relative Positionen (P, P') zueinander einzunehmen;
- Erfassen eines Signals, das die relative Position der ersten und der zweiten Quelle angibt, mit Hilfe von Mitteln (130, 230, 330), die dazu fähig sind, ein solches Signal zu erfassen;
- Ansteuern der zwei Lichtquellen in Abhängigkeit von der relativen Position der ersten und der zweiten Quelle, sodass für mindestens eine erste vorgegebene relative Position die erste Lichtquelle (110, 210, 310) an der Realisierung einer ersten vorgegebenen vorschriftsmäßigen Leuchtfunktion des Kraftfahrzeugs mitwirkt und die zweite Lichtquelle (120, 220, 320) an der Realisierung einer zweiten vorgegebenen vorschriftsmäßigen Leuchtfunktion des Kraftfahrzeugs mitwirkt, die sich von der ersten vorgegebenen vorschriftsmäßigen Leuchtfunktion unterscheidet, und sodass für mindestens eine zweite vorgegebene relative Position die erste Lichtquelle (110, 210, 310) an der Realisierung der zweiten vorgegebenen vorschriftsmäßigen Leuchtfunktion mitwirkt, wobei die Position durch das Signal angegeben wird;
- Versorgen mindestens einer der Lichtquellen mit Strom, um in Abhängigkeit von der relativen Position der ersten und der zweiten Quelle verschiedene Lichtleistungen zu emittieren, wobei die Position durch das Signal angegeben wird.

## Claims

1. Light device (100, 200, 300) for a motor vehicle, comprising at least two light sources (110,120; 210,220; 310,320), of which at least one first source (110, 210, 310) is intended to be arranged on a first part of the chassis of the motor vehicle, and at least one second source (120, 220, 320) is intended to be arranged on a second part of the chassis, such that the first (110, 210, 310) and the second (120, 220, 320) sources are capable of assuming at least two distinct and predetermined relative positions (P, P') relative to one another, such that
the device comprises means for controlling the light flux (140, 240, 340) from the light sources, configured to control the emission of different light fluxes by the light sources, according to the relative position of the first (110, 210, 310) and of the second (120, 220, 320) sources, and such that the control means are configured to control the two light sources (110, 120; 210, 220; 310, 320) according to the relative position of the first (110, 210, 310) and of the second (120, 220, 320) sources such that, for at least one first predetermined relative position, the first light source contributes to the production of a first predetermined regulatory light function of the motor vehicle and the second light source contributes to the production of a second predetermined regulatory light function of the motor vehicle distinct from the first predetermined regulatory light function, the device being **characterized in that** the control means are configured
such that, for at least one second predetermined relative position, the first light source contributes to the production of the second predetermined regulatory light function.

2. Device according to Claim 1, **characterized in that** the device comprises means (130, 230, 330) capable of obtaining a signal indicative of the relative position of the first and second sources.

3. Device according to one of Claims 1 or 2, **characterized in that** the means for controlling the light flux are configured to control the first and second light sources such that these sources, when they are in the first relative position, together emit a first overall light flux capable of producing the first predetermined regulatory light function.

4. Device according to one of Claims 1 to 3, **characterized in that** the means for controlling the light flux (140, 240, 340) are configured to control the first source such that the first source (110, 210, 310) emits a light flux of a first intensity when the indicated relative position corresponds to the first predetermined position (P), and a flux of a second intensity when the indicated relative position corresponds to the second predetermined position (P'), the first intensity emitted by the first source being lower than the second intensity emitted by the first source.

5. Device according to one of Claims 1 to 4, **characterized in that** the means for controlling the light flux (140, 240, 340) are configured to control the second source such that the second source (120, 220, 320) emits a light flux of a first intensity when the indicated relative position corresponds to the first predetermined position (P), and a flux of a second intensity when the indicated relative position corresponds to the second predetermined position (P'), the first intensity emitted by the second source being higher than the second intensity emitted by the second source.

6. Device according to one of Claims 1 to 4, **characterized in that** the means for controlling the light flux (140, 240, 340) are configured to control the second source such that the second source (120, 220, 320) emits a light flux of a first intensity when the indicated relative position corresponds to the first predetermined position (P), and a flux of a second intensity when the indicated relative position corresponds to the second predetermined position (P'), the first intensity emitted by the second source being lower than the second intensity emitted by the second source.

7. Device according to one of Claims 3 to 6, **characterized in that** the first source and/or the second source is mobile between the first and the second predetermined positions, the other being fixed, and **in that** the means for controlling the light flux are configured such that the mobile source emits a flux of an intensity which is a function of an intermediate position between the first position (P) and the second predetermined position (P').

8. Motor vehicle equipped with a light device, **characterized in that** the light device corresponds to the device according to one of Claims 1 to 7.

9. Motor vehicle according to Claim 8, **characterized in that** the first light source is arranged on a rear wing of the chassis, and **in that** the second light source is arranged on a face of the boot lid of the vehicle, which is mobile relative to the rear wing of the chassis.

10. Motor vehicle according to Claim 9, **characterized in that** the first predetermined position corresponds to the open position of the boot lid.

11. Method for managing the light flux in a light device (100, 200, 300) for a motor vehicle, the method comprising the following steps:
- providing a light device comprising at least two light sources, of which at least one first source (110, 210, 310) is intended to be arranged on a first part of the chassis of the motor vehicle, and at least one second source (120, 220, 320) is intended to be arranged on a second part of the chassis, such that the first and second sources are capable of assuming at least two distinct and predetermined relative positions (P, P'), with respect to one another
- obtaining a signal indicative of the relative position of the first and second sources using means (130, 230, 330) capable of obtaining such a signal
- controlling the two light sources, according to the relative position of the first and second sources such that, for at least one first predetermined relative position, the first light source (110, 210, 310) contributes to the production of a first predetermined regulatory light function of the motor vehicle and the second light source (120, 220, 320) contributes to the production of a second predetermined regulatory light function of the motor vehicle distinct from the first predetermined regulatory light function and such that, for at least one second predetermined relative position, the first light source (110, 210, 310) contributes to the production of the second predetermined regulatory light function, the position being indicated by said signal;
- powering at least one of the light sources so as to emit different light fluxes according to the relative position of the first and second sources, the position being indicated by said signal.
